# EUROPÄISCHE PATENTSCHRIFT

(11) **EP 3 280 904 B1**
(45) Veröffentlichungstag und Bekanntmachung des Hinweises auf die Patenterteilung: **27.02.2019**
(21) Anmeldenummer: 16711257.2
(22) Anmeldetag: 21.03.2016
(51) Int. Cl.: F02M 21/02, H01F 7/16

(54) **GASVENTIL**
GAS VALVE
VANNE DE GAZ

(30) Priorität: 08.04.2015 DE 102015206202
(43) Veröffentlichungstag der Anmeldung: 14.02.2018
(73) Patentinhaber: Robert Bosch GmbH, 70442 Stuttgart (DE)
(72) Erfinder: WESSNER, Jochen, 73728 Esslingen (DE); WIEDMANN, Felix, 70469 Stuttgart (DE)
(86) Internationale Anmeldenummer: PCT/EP2016/056114
(87) Internationale Veröffentlichungsnummer: WO 2016/162194

(56) Entgegenhaltungen:
- WO-A1-2010/006040
- DE-A1- 3 705 024
- DE-A1- 10 353 011

## Beschreibung

Die Erfindung betrifft ein Gasventil zum Eindosieren eines gasförmigen Brennstoffs in einen Ansaugtrakt einer Verbrennungskraftmaschine mit den Merkmalen des Oberbegriffs des Anspruchs 1.

### Stand der Technik

Ein Gasventil der vorstehend genannten Art kann insbesondere zur Brennstoffversorgung von Gas- oder Gas-Diesel-Motoren in Personenkraft- oder Nutzfahrzeugen, in Schienenfahrzeugen und/oder auf Schiffen verwendet werden. Weitere mögliche Applikationen stellen Gas- oder Gas-Diesel-Motoren in Anlagen zur Energiegewinnung und/oder Energieerzeugung dar.

Aus der Offenlegungsschrift DE 103 53 011 A1 geht beispielhaft ein Gasventil hervor, das insbesondere für den Einsatz in einem Gasmotor ausgelegt ist und der Regelung eines Gasstroms von einer Zuströmseite zu einer Abströmseite dient. Hierzu weist das Gasventil ein Ventilgehäuse auf, in dem eine Betätigungseinheit für einen Magnetanker aufgenommen ist, der in dem Ventilgehäuse axial verschiebbar geführt ist. Der Magnetanker ist mit einem Ventilschließglied versehen, an dessen Stirnseite ein Dichtelement angeordnet ist, das derart mit einem an einer Sitzplatte ausgebildeten Ventilsitz zusammenwirkt, dass ein Gasstrom durch Abströmöffnungen der Sitzplatte steuerbar ist.

Der vorliegenden Erfindung liegt die Aufgabe zugrunde, ein Gasventil anzugeben, das eine hohe Stelldynamik aufweist und zugleich energieeffizient betreibbar ist.

Zur Lösung der Aufgabe wird das Gasventil mit den Merkmalen des Anspruchs 1 vorgeschlagen. Vorteilhafte Weiterbildungen der Erfindung sind den Unteransprüchen zu entnehmen.

### Offenbarung der Erfindung

Das zum Eindosieren eines gasförmigen Brennstoffs in einen Ansaugtrakt einer Verbrennungskraftmaschine vorgeschlagene Gasventil umfasst einen Elektromagneten und einen mit dem Elektromagneten zusammenwirkenden hubbeweglichen Anker. Der Anker ist dabei in Richtung eines Ventilsitzelements, das mindestens einen Ventilsitz ausbildet, von der Federkraft mindestens einer Schließfeder beaufschlagt. Erfindungsgemäß ist der Anker mehrteilig ausgebildet und umfasst zumindest ein Flachankerteil und ein Tauchankerteil, die ineinander axial beweglich geführt sind.

Die mehrteilige Ausbildung des Ankers besitzt den Vorteil, dass das Gasventil in mehreren Stufen öffenbar ist. Das mehrstufige Öffnen wiederum ermöglicht eine große Mengenspreizung sowie eine genaue Dosierung des Gases. Ferner kann durch ein mehrstufiges Öffnen die Anpassung der Belastungskennlinie durch Druck-, Strömungs- und Federkräfte an den Magnetkraftverlauf verbessert werden. Auf diese Weise wird die Energieeffizienz gesteigert.

Um ein schnelles Öffnen und einen schnellen Druckkraftabbau zu bewirken, werden vorzugsweise in einer ersten Stufe das Flachankerteil und das Tauchankerteil gemeinsam bewegt. In einer weiteren Stufe kann anschließend der größere Hub des Tauchankerteils genutzt werden, den Massendurchfluss zu erhöhen. Das heißt, dass sich in der zweiten Stufe allein das Tauchankerteil und zwar relativ zum Flachankerteil bewegt. Durch die reduzierte bewegte Masse in der zweiten Stufe kann der Energiebedarf weiter gesenkt werden. Ferner wird die Stelldynamik erhöht.

Die mehrteilige Ausführung des Ankers stellt eine Voraussetzung zur Darstellung eines mehrstufigen Öffnungsverhaltens dar. Darüber hinaus müssen die mehreren Teile des Ankers in axialer Richtung relativ zueinander beweglich sein. Dies wird vorliegend dadurch erreicht, dass zumindest das Flachankerteil und das Tauchankerteil ineinander axial beweglich geführt sind. Auf diese Weise erhält man zugleich eine besonders kompaktbauende Anordnung.

Vorzugsweise sind das Flachankerteil und das Tauchankerteil derart ineinander geführt, dass ein Ankerteil das jeweils andere Ankerteil über einen Teilhubbereich mitführt.

Während einer ersten Stufe beim Öffnen führt vorzugsweise das Flachankerteil das Tauchankerteil mit. In einer weiteren Stufe setzt dann das Tauchankerteil seinen Öffnungshub ohne das Flachankerteil fort. Beim Schließen verhält es sich umgekehrt. Das heißt, dass während einer ersten Stufe beim Schließen lediglich das Tauchankerteil zurückgestellt wird bis dieses zur Anlage am Flachankerteil gelangt. In einer weiteren Stufe werden dann das Tauchankerteil und das Flachankerteil gemeinsam zurückgestellt, wobei das Tauchankerteil das Flachankerteil mitführt. Das Schließen kann demzufolge mit nur einer Schließfeder bewirkt werden.

Das mehrstufige Schließverhalten des Gasventils weist ebenfalls Vorteile auf. Insbesondere kann aufgrund der Trennung der bewegten Massen die Schließzeit verkürzt werden. Wird schließlich die Trennung der Massen aufgehoben, kann die Schließdrosselwirkung des Ventilsitzes bzw. der Ventilsitze unterstützend eingesetzt werden. Das Gasventil weist demnach eine hohe Stell- bzw. Schaltdynamik auf.

Bevorzugt bildet zumindest das Flachankerteil oder das Tauchankerteil ein mit einem Ventilsitz zusammenwirkendes Ventilschließelement aus oder ist mit einem solchen Ventilschließelement verbunden. Bildet zumindest ein Ankerteil zugleich ein Ventilschließelement aus, kann die Anzahl der Bauteile reduziert werden, was den Aufbau des Gasventils vereinfacht. Sofern jedes Ankerteil ein Ventilschließelement ausbildet oder mit einem solchen verbunden ist, können hierüber mehrere Ventilsitze getrennt voneinander gesteuert werden.

Vorzugsweise bildet das Flachankerteil ein erstes Ventilschließelement aus oder ist mit einem solchen verbunden, so dass über das erste Ventilschließelement ein erster Ventilsitz steuerbar ist. Des Weiteren bevorzugt bildet das Tauchankerteil ein zweites Ventilschließelement aus oder ist mit einem solchen verbunden, so dass über das zweite Ventilschließelement ein zweiter Ventilsitz steuerbar ist. Durch die Kombination eines mehrteilig ausgeführten Ankers mit einem mehrere Ventilsitze ausbildenden Ventilsitzelement kann eine besonders große Mengenspreizung dargestellt werden. Ferner wird die Dosiergenauigkeit weiter optimiert.

Das durch ein Ankerteil ausgebildete oder mit einem Ankerteil verbundene Ventilschließelement besitzt vorzugsweise eine in dichtender Anlage mit einem Ventilsitz bringbare Dichtfläche. Die Ausgestaltung der Dichtfläche hängt dabei von der Ausgestaltung des Ventilsitzes ab. Vorzugsweise ist die Dichtfläche an einem mit dem Ventilschließelement bzw. dem jeweiligen Ankerteil verbundenen Dichtkörper ausgebildet. In diesem Fall kann die Wahl des Werkstoffs der jeweiligen Funktion eines Bauteils angepasst werden. Um eine hohe Dichtwirkung zu erzielen, ist vorzugsweise der Dichtkörper aus einem Elastomermaterial gefertigt.

In Weiterbildung der Erfindung wird vorgeschlagen, dass ein Ventilsitz eine entlang einer Kreislinie verlaufende Durchlassöffnung begrenzt. Die Durchlassöffnung kann dabei kreis- oder teilkreisförmig ausgebildet sein. Zur Begrenzung der Durchlassöffnung wird der Ventilsitz bevorzugt durch zwei ringförmige Erhebungen ausgebildet, die beidseits der kreis- bzw. teilkreisförmigen Durchlassöffnung angeordnet sind. Weiterhin bevorzugt bilden die beiden ringförmigen Erhebungen einen im Querschnitt kegel- oder kegelstumpfförmigen Ventilsitz aus, so dass die Durchlassöffnung von ringförmigen Dichtkanten begrenzt wird. Die ringförmigen Dichtkanten erhöhen die Dichtwirkung.

Alternativ oder ergänzend wird vorgeschlagen, dass ein Ventilsitz eine zentrale Durchlassbohrung begrenzt. Der vergleichsweise kleine Sitzdurchmesser des die Durchlassbohrung begrenzenden Ventilsitzes führt zu einer Reduzierung der Öffnungskraft. Das Öffnen kann demnach mit verringerter Magnetkraft bewirkt werden. Dies wiederum wirkt sich günstig auf den Energiebedarf des Gasventils aus. Der die Durchlassbohrung begrenzende Ventilsitz kann flach oder kegelförmig ausgebildet sein. Vorzugsweise ist der Ventilsitz als kegelförmige Vertiefung in das Ventilsitzelement eingearbeitet. Eine solche Ventilsitzform ist einfach und kostengünstig herstellbar, insbesondere, wenn die Herstellung gemeinsam mit der Herstellung der Durchlassbohrung erfolgt.

Gemäß einer bevorzugten Ausführungsform der Erfindung ist das Flachankerteil oder das Tauchankerteil zumindest abschnittsweise hohlzylinderförmig ausgebildet und von mindestens einer Radialbohrung und/oder einer Axialbohrung durchsetzt. Der holzylinderförmige Abschnitt kann zur Ausbildung eines Ventilschließelements genutzt werden, wobei die Radial- und/oder Axialbohrung gewährleistet, dass das Gasventil radial und/oder axial anströmbar ist. Die Axialbohrung kann entfallen, wenn das Gasventil ausschließlich radial angeströmt werden soll. Sofern mehrere Radialbohrungen vorgesehen sind, sind diese bevorzugt in gleichem Winkelabstand zueinander angeordnet. Die Radialbohrungen gewährleisten eine gleichmäßige Verteilung des Gases im Zuströmbereich des Ventils. Insbesondere ist durch die Radialbohrungen sichergestellt, dass ein ringförmiger Ventilsitz sowohl von radial außen, als auch von radial innen angeströmt wird.

Alternativ oder ergänzend wird vorgeschlagen, dass das Flachankerteil oder das Tauchankerteil zumindest abschnittsweise bolzenförmig ausgebildet ist. Der bolzenförmige Abschnitt kann ebenfalls zur Ausbildung eines Ventilschließelements genutzt werden.

Gemäß einer bevorzugten Ausführungsform der Erfindung ist das Tauchankerteil durch das Flachankerteil gesteckt und bildet einen radial verlaufenden Absatz aus, gegen den das Flachankerteil durch die Federkraft einer Feder axial vorgespannt ist. Über den radial verlaufenden Absatz wird eine Mitnehmerfunktion realisiert, die vorzugsweise in einer ersten Stufe beim Öffnen und in einer letzten Stufe beim Schließen des Gasventils zum Tragen kommt. Die Federkraft der Feder stellt währenddessen den gewünschten Ankerverband sicher.

Die Feder ist hierzu bevorzugt einerseits am Flachankerteil und andererseits am Tauchankerteil abgestützt. Die Abstützung am Tauchankerteil kann mittelbar über eine Einstellscheibe erfolgen. Die Einstellscheibe besitzt den Vorteil, dass sie eine Einstellung der Federvorspannung bzw. der Federkraft der Feder ermöglicht. Die erforderliche Lagefixierung der Einstellscheibe kann mittels eines in eine außenumfangseitige Ringnut des Tauchankerteils eingesetzten Sicherungsrings bewirkt werden. Alternativ kann eine Bundhülse zur Abstützung der Einstellscheibe vorgesehen werden, die mit dem Tauchankerteil verbunden, vorzugsweise verschraubt, ist.

Gemäß einer weiteren bevorzugten Ausführungsform der Erfindung ist das Tauchankerteil durch das Flachankerteil gesteckt und besitzt eine radial verlaufende Anschlagfläche für das Flachankerteil. Die Federkraft einer ersten Schließfeder beaufschlagt dabei das Tauchankerteil in Richtung eines ersten Ventilsitzes, während die Federkraft einer zweiten Schließfeder das Flachankerteil in Richtung eines zweiten Ventilsitzes beaufschlagt. Die mehreren Teile des Ankers bilden bei dieser Ausführungsform jeweils ein Ventilschließelement für einen Ventilsitz des Ventilsitzelements aus. Über die mehreren Ankerteile bzw. Ventilschließelemente sind die mehreren Ventilsitze zeitlich versetzt öffenbar bzw. schließbar, so dass eine große Mengenspreizung und eine hohe Dosiergenauigkeit erreichbar sind.

Vorzugsweise sind der Elektromagnet und der Anker in ein Ventilgehäuse eingesetzt, das mindestens eine radial und/oder schräg verlaufende Zuströmbohrung aufweist, so dass das Gasventil zumindest radial anströmbar ist.

Alternativ oder ergänzend wird vorgeschlagen, dass der Elektromagnet einen Polkörper umfasst, der eine als Zuströmkanal dienende Axialbohrung aufweist, so dass das Gasventil zumindest axial anströmbar ist.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Gasventil gemäß einer ersten bevorzugten Ausführungsform,
Fig. 2 einen schematischen Längsschnitt durch einen Anker für ein erfindungsgemäßes Gasventil und
Fig. 3 einen schematischen Längsschnitt durch ein erfindungsgemäßes Gasventil gemäß einer weiteren bevorzugten Ausführungsform.

### Ausführliche Beschreibung der Zeichnungen

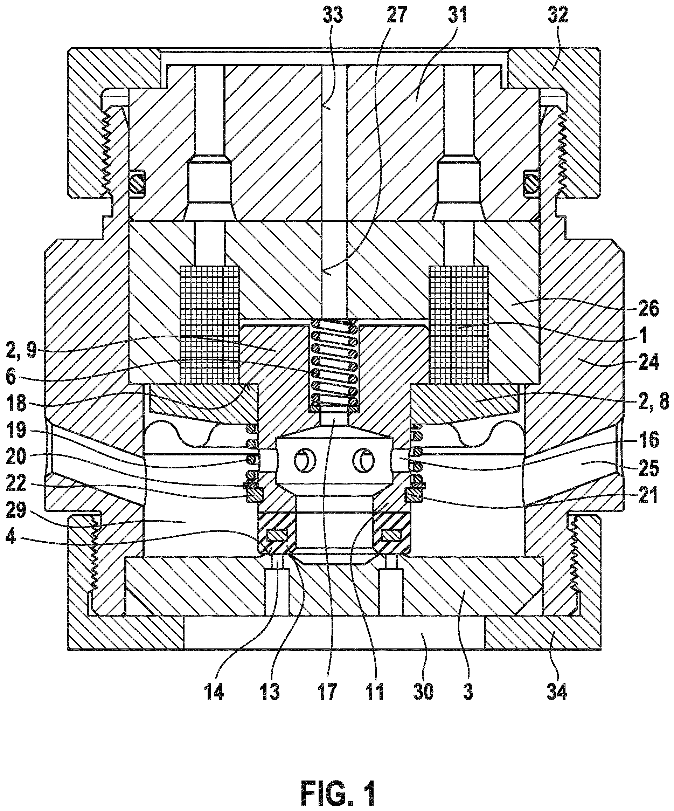

In der Fig. 1 ist ein Gasventil dargestellt, das ein hohlzylinderförmiges Ventilgehäuse 24 besitzt, in dem ein Elektromagnet 1 zur Einwirkung auf einen mehrteilig ausgeführten, hubbeweglichen Anker 2 aufgenommen ist. Das hohlzylinderförmige Ventilgehäuse 24 weist Zuströmbohrungen 25 auf, die im Wesentlichen radial verlaufen und als Zuströmkanal für ein einzudosierendes Gas dienen. Über die Zuströmbohrungen 25 gelangt das Gas in einen Zuströmbereich 29, der in axialer Richtung von einem plattenförmigen Ventilsitzelement 3 begrenzt wird, das ebenfalls in das Ventilgehäuse 24 eingesetzt ist. Das Ventilsitzelement 3 weist einen Ventilsitz 4 auf, der in der Draufsicht ringförmig und im Querschnitt kegelförmig ausgebildet ist. Der Ventilsitz 4 begrenzt eine Durchlassöffnung 14, über welche der Zuströmbereich 29 mit einem Abströmbereich 30 verbindbar ist. Ein mit dem Ventilsitz 4 zusammenwirkendes Ventilschließelement 11 wird durch den mehrteilig ausgeführten Anker 2 ausgebildet.

Der mehrteilig ausgeführte Anker 2 umfasst ein Flachankerteil 8 und ein Tauchankerteil 9, die ineinander axial beweglich geführt sind. Das mit dem Ventilsitz 4 zusammenwirkende Ventilschließelement 11 wird durch das Tauchankerteil 9 ausgebildet. Zur Optimierung der Dichtwirkung weist das Ventilschließelement 11 bzw. das Tauchankerteil 9 einen ringförmigen Dichtkörper 13 auf, der in dichtender Anlage mit dem ringförmigen Ventilsitz 4 bringbar ist. Der Dichtkörper 13 ist hierzu stirnseitig auf einen hohlzylinderförmigen Abschnitt des Tauchankerteils 9 aufgesetzt, der das Ventilschließelement 11 ausbildet. Andernends weist das Tauchankerteil 9 eine stirnseitige Ausnehmung auf, in die eine Schließfeder 6 eingesetzt ist. Die Federkraft der Schließfeder 6 beaufschlagt das Tauchankerteil 9 in Richtung des Ventilsitzes 4, so dass es sich bei dem dargestellten Gasventil um ein stromlos geschlossenes Ventil handelt. Zum Öffnen des Gasventils muss der Elektromagnet 1 bestromt werden.

Wird der Elektromagnet 1 des Gasventils der Fig. 1 bestromt, bewegen sich - entgegen der Federkraft der Schließfeder 6 - das Flachankerteil 8 und das Tauchankerteil 9 zunächst gemeinsam nach oben. Unterstützend wirkt hierbei eine Feder 19, deren Federkraft das Flachankerteil 8 gegen einen Absatz 18 des Tauchankerteils 9 axial vorspannt. Zur Abstützung der Feder 19 am Tauchankerteil 9 und zur Einstellung der Vorspannkraft ist eine Einstellscheibe 20 vorgesehen, die über einen Sicherungsring 22 lagefixiert ist, der in einer Ringnut 21 des Tauchankerteils 9 eingelassenen ist. Mit Anschlagen des Flachankerteils 8 an einem Polkörper 26, vermag das Tauchankerteil 9 seinen Hub alleine fortzusetzen, so dass ein größerer Massenfluss darstellbar ist. Über das mehrstufige Öffnen des Gasventils sind somit eine größere Mengenspreizung und eine genauere Dosierung des Gases realisierbar.

Ist das Gasventil geöffnet, strömt das einzudosierende Gas aus dem Zuströmbereich 29 über den Ventilsitz 4 und die Durchlassöffnung 14 in den Abströmbereich 30. Eine gleichmäßige Verteilung des Gases im Zuströmbereich 29 wird über Radialbohrungen 16 erreicht, die im gleichen Winkelabstand zueinander im hohlzylinderförmigen Abschnitt des Tauchankerteils 9 ausgebildet sind. Darüber hinaus ist im Tauchankerteil 9 eine Axialbohrung 17 vorgesehen. Diese stellt in Verbindung mit einer Axialbohrung 27, die im Polkörper 26 ausgebildet ist, sicher, dass das Gasventil der Fig. 1 sowohl radial als auch axial anströmbar ist. Oberhalb des Polkörpers 26 ist eine Scheibe 31 angeordnet, die über eine Mutter 32 im Ventilgehäuse 24 gehalten ist. Die Scheibe 31 weist ebenfalls eine Axialbohrung 33 als Zuströmkanal für das Gas auf. Andernends ist eine Mutter 34 vorgesehen, mittels welcher das Ventilsitzelement 3 im Ventilgehäuse 24 gehalten ist.

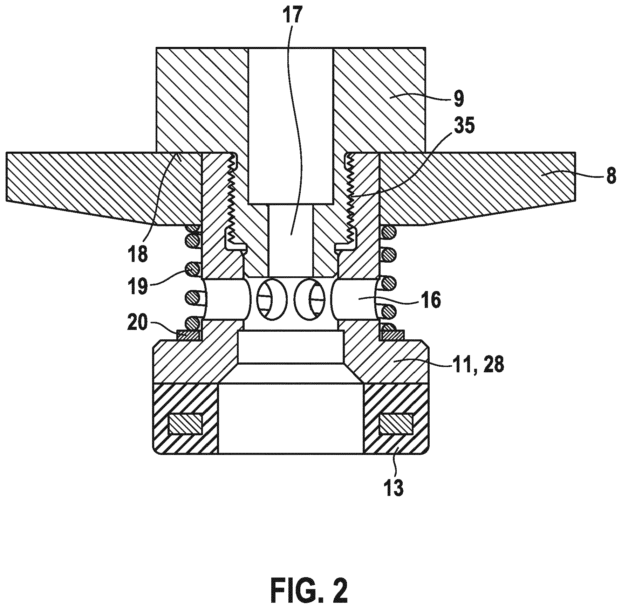

Der Fig. 2 ist eine alternative Ausführungsform eines mehrteilig ausgeführten Ankers 2 für ein mehrstufig öffnendes Gasventil zu entnehmen. Hier wird das Ventilschließelement 11 durch eine Bundhülse 28 ausgebildet, die über eine Schraubverbindung 35 mit dem Tauchankerteil 9 verbunden ist. Die Bundhülse 28 ersetzt den Sicherungsring 22, da die Feder 19 mittelbar über die Einstellscheibe 20 an der Bundhülse 28 abgestützt ist.

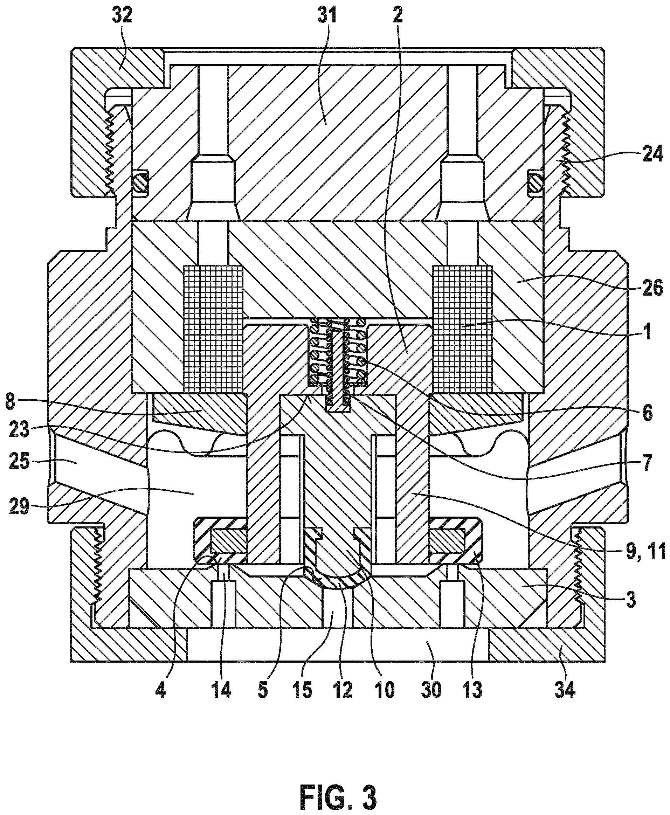

Eine weitere bevorzugte Ausführungsform eines erfindungsgemäßen Gasventils ist in der Fig. 3 dargestellt. Bei dieser Ausführungsform wirkt der mehrteilig ausgeführte Anker 2 mit mehreren im Ventilsitzelement 3 ausgebildeten Ventilsitzen 4, 5 zusammen. Der mehrteilig ausgeführte Anker 2 umfasst hierzu ein Flachankerteil 8, das ein erstes Ventilschließelement 10 ausbildet, sowie ein Tauchankerteil 9, das ein zweites Ventilschließelement 11 ausbildet. An beiden Ventilschließelementen 10, 11 sind Dichtkörper 12, 13 vorgesehen, um die Dichtwirkung zu erhöhen. Ferner ist jedes Ankerteil von der Federkraft einer Schließfeder 6, 7 beaufschlagt.

Die Ventilsitze 4, 5 sind konzentrisch zueinander angeordnet, wobei der Ventilsitz 5 eine zentrale Durchlassbohrung 15 begrenzt. Das mit dem Ventilsitz 5 zusammenwirkende Ventilschließelement 10, das vorliegend durch das Flachankerteil 8 ausgebildet wird, ist bolzenförmig ausgeführt. Der Ventilsitz 4 ist in der Draufsicht ringförmig ausgebildet und umgibt den Ventilsitz 5. Das mit dem Ventilsitz 4 zusammenwirkende Ventilschließelement 11 wird analog der Ausführungsform der Fig. 1 durch einen hohlzylinderförmigen Abschnitt des Tauchankerteils 9 ausgebildet, wobei der Dichtkörper 13 nicht stirnseitig, sondern außenumfangseitig auf den hohlzylinderförmigen Abschnitt aufgesetzt ist. Auf diese Weise kann der Außendurchmesser des hohlzylinderförmigen Abschnitts des Tauchankerteils 9 verringert werden, um seine Masse zu reduzieren.

Die Möglichkeit, die Ventilsitze 4, 5 über den mehrteilig ausgeführten Anker 2 zeitlich versetzt öffnen zu können, wirkt sich günstig auf eine große Mengenspreizung und eine hohe Dosiergenauigkeit aus. Während der zentral angeordnete Ventilsitz 5 die Kleinstmengenfähigkeit des Gasventils verbessert, kann durch zusätzliches Öffnen des Ventilsitzes 4 ein großer Massenstrom bewirkt werden. Ferner ist eine hohe Stelldynamik durch die Trennung der Massen gewährleistet.

Der vergleichsweise kleine Sitzdurchmesser des zentral angeordneten Ventilsitzes 5 führt zu einer Reduzierung der Öffnungskraft, was sich günstig auf den Energiebedarf auswirkt. Mit Öffnen des Ventilsitzes 5 wird Druck im Zuströmbereich 29 abgebaut, so dass sich ferner die zum Öffnen des Ventilsitzes 4 erforderliche Öffnungskraft reduziert. Hinzu kommt, dass am Tauchankerteil 9 eine Anschlagfläche 23 für das öffnende Flachankerteil 8 ausgebildet ist. Mit Anschlagen des Flachankerteils 8 an dieser Anschlagfläche 23 wird ein in Öffnungsrichtung wirkender Impuls auf das Tauchankerteil 9 übertragen, der unterstützend wirkt.

Die Erfindung ist nicht auf die in den Figuren dargestellten Ausführungsformen beschränkt. Vielmehr sind Abwandlungen möglich, welche insbesondere die konkrete Ausgestaltung der Ventilschließelemente 10, 11 und/oder hiermit verbundener Dichtkörper 12, 13 sowie die Geometrie der Ventilsitze 4, 5 betreffen.

## Patentansprüche

1. Gasventil zum Eindosieren eines gasförmigen Brennstoffs in einen Ansaugtrakt einer Verbrennungskraftmaschine, umfassend einen Elektromagneten (1) und einen mit dem Elektromagneten (1) zusammenwirkenden hubbeweglichen Anker (2), der in Richtung eines Ventilsitzelements (3), das mindestens einen Ventilsitz (4, 5) ausbildet, von der Federkraft mindestens einer Schließfeder (6, 7) beaufschlagt ist,
**dadurch gekennzeichnet, dass** der Anker (2) mehrteilig ausgebildet ist und zumindest ein Flachankerteil (8) und ein Tauchankerteil (9) umfasst, die ineinander axial beweglich geführt sind.

2. Gasventil nach Anspruch 1,
**dadurch gekennzeichnet, dass** das Flachankerteil (8) und/oder das Tauchankerteil (9) ein mit einem Ventilsitz (4, 5) zusammenwirkendes Ventilschließelement (10,11) ausbildet bzw. ausbilden oder mit einem solchen Ventilschließelement (10, 11) verbunden ist bzw. sind.

3. Gasventil nach Anspruch 2,
**dadurch gekennzeichnet, dass** das Ventilschließelement (10, 11) eine Dichtfläche besitzt, die in dichtender Anlage mit dem Ventilsitz (4, 5) bringbar ist, wobei vorzugsweise die Dichtfläche an einem mit dem Ventilschließelement (10, 11) verbundenen Dichtkörper (12, 13) ausgebildet ist.

4. Gasventil nach einem der vorhergehenden Ansprüche,
**dadurch gekennzeichnet, dass** ein Ventilsitz (4), der vorzugsweise durch zwei ringförmige Erhebungen ausgebildet wird, eine entlang einer Kreislinie verlaufende Durchlassöffnung (14) begrenzt und/oder ein Ventilsitz (5), der vorzugsweise kegelförmig ausgebildet ist, eine zentrale Durchlassbohrung (15) begrenzt.

5. Gasventil nach einem der vorhergehenden Ansprüche,
**dadurch gekennzeichnet, dass** das Flachankerteil (8) oder das Tauchankerteil (9) zumindest abschnittsweise hohlzylinderförmig ausgebildet ist und von mindestens einer Radialbohrung (16) und/oder einer Axialbohrung (17) durchsetzt ist.

6. Gasventil nach einem der vorhergehenden Ansprüche,
**dadurch gekennzeichnet, dass** das Flachankerteil (8) oder das Tauchankerteil (9) zumindest abschnittsweise bolzenförmig ausgebildet ist.

7. Gasventil nach einem der vorhergehenden Ansprüche,
**dadurch gekennzeichnet, dass** das Tauchankerteil (9) durch das Flachankerteil (8) gesteckt ist und einen radial verlaufenden Absatz (18) ausbildet, gegen den das Flachankerteil (8) durch die Federkraft einer Feder (19) axial vorgespannt ist.

8. Gasventil nach Anspruch 7,
**dadurch gekennzeichnet, dass** die Feder (19) einerseits am Flachankerteil (8) und andererseits am Tauchankerteil (9) abgestützt ist, wobei vorzugsweise die Abstützung am Tauchankerteil (9) mittelbar über eine Einstellscheibe (20) erfolgt, die mittels eines in eine außenumfangseitige Ringnut (21) des Tauchankerteils (9) eingesetzten Sicherungsrings (22) oder mittels einer mit dem Tauchankerteil (9) verbundenen, vorzugsweise verschraubten, Bundhülse (28) lagefixiert ist.

9. Gasventil nach einem der Ansprüche 1 bis 6,
**dadurch gekennzeichnet, dass** das Tauchankerteil (9) durch das Flachankerteil (8) gesteckt ist und eine radial verlaufende Anschlagfläche (23) für das Flachankerteil (8) besitzt, wobei die Federkraft einer ersten Schließfeder (6) das Tauchankerteil (9) in Richtung eines ersten Ventilsitzes (4) beaufschlagt und die Federkraft einer zweiten Schließfeder (7) das Flachankerteil (8) in Richtung eines zweiten Ventilsitzes (5) beaufschlagt.

10. Gasventil nach einem der vorhergehenden Ansprüche,
**dadurch gekennzeichnet, dass** der Elektromagnet (1) und der Anker (2) in ein Ventilgehäuse (24) eingesetzt sind, das mindestens eine radial und/oder schräg verlaufende Zuströmbohrung (25) aufweist, so dass das Gasventil zumindest radial anströmbar ist.

11. Gasventil nach einem der vorhergehenden Ansprüche,
**dadurch gekennzeichnet, dass** der Elektromagnet (1) einen Polkörper (26) umfasst, der eine als Zuströmkanal dienende Axialbohrung (27) aufweist, so dass das Gasventil zumindest axial anströmbar ist.

## Claims

1. Gas valve for dosing a gaseous fuel into an intake tract of an internal combustion engine, comprising an electromagnet (1) and an armature (2) which interacts with the electromagnet (1) and which can perform stroke movements and which is forced, by the spring force of at least one closing spring (6, 7), in the direction of a valve seat element (3) which forms at least one valve seat (4, 5),
**characterized in that** the armature (2) is of multi-part form and comprises at least one armature flat part (8) and one armature plunger part (9), which are guided in axially movable fashion one inside the other.

2. Gas valve according to Claim 1,
**characterized in that** the armature flat part (8) and/or the armature plunger part (9) form(s) a valve closing element (10, 11) which interacts with a valve seat (4, 5), or are or is connected to a valve closing element (10, 11) of said type.

3. Gas valve according to Claim 2,
**characterized in that** the valve closing element (10, 11) has a sealing surface which can be placed in sealing contact with the valve seat (4, 5), wherein preferably, the sealing surface is formed on a sealing body (12, 13) connected to the valve closing element (10, 11).

4. Gas valve according to any of the preceding claims, **characterized in that** a valve seat (4) which is formed preferably by two ring-shaped elevations delimits a passage opening (14) running along a circular line, and/or a valve seat (5) which is preferably of conical form delimits a central passage bore (15).

5. Gas valve according to any of the preceding claims, **characterized in that** the armature flat part (8) or the armature plunger part (9) is, at least in portions, of hollow cylindrical form and extended through by at least one radial bore (16) and/or one axial bore (17).

6. Gas valve according to any of the preceding claims, **characterized in that** the armature flat part (8) or the armature plunger part (9) is, at least in portions, of bolt-like form.

7. Gas valve according to any of the preceding claims, **characterized in that** the armature plunger part (9) is inserted through the armature flat part (8) and forms a radially running shoulder (18) against which the armature flat part (8) is axially preloaded by the spring force of a spring (19).

8. Gas valve according to Claim 7,
**characterized in that** the spring (19) is supported at one side on the armature flat part (8) and at the other side on the armature plunger part (9), wherein preferably, the support on the armature plunger part (9) is realized indirectly via an adjusting disc (20) which is fixed in position by means of a securing ring (22) inserted into an annular groove (21) on the outer circumference of the armature plunger part (9) or by means of a collar sleeve (28) connected, preferably screwed, to the armature plunger part (9).

9. Gas valve according to any of Claims 1 to 6, **characterized in that** the armature plunger part (9) is inserted through the armature flat part (8) and has a radially running abutment surface (23) for the armature flat part (8), wherein the spring force of a first closing spring (6) forces the armature plunger part (9) in the direction of a first valve seat (4), and the spring force of a second closing spring (7) forces the armature flat part (8) in the direction of a second valve seat (5).

10. Gas valve according to any of the preceding claims, **characterized in that** the electromagnet (1) and the armature (2) are inserted into a valve housing (24) which has at least one radially and/or obliquely running inflow bore (25), such that the gas valve can be flowed into at least radially.

11. Gas valve according to any of the preceding claims, **characterized in that** the electromagnet (1) comprises a pole body (26) which has an axial bore (27) which serves as inflow channel, such that the gas valve can be flowed into at least axially.

## Revendications

1. Soupape de gaz destinée à doser un combustible gazeux dans un système d'admission d'un moteur à combustion interne, comportant un électroaimant (1) et une armature (2) à mouvement de va-et-vient coopérant avec l'électroaimant (1), laquelle est sollicitée, par la force d'au moins un ressort de fermeture (6, 7), en direction d'un élément à siège de soupape (3) qui forme au moins un siège de soupape (4, 5),
**caractérisée en ce que** l'armature (2) est réalisée en plusieurs parties et comporte au moins une partie d'armature plate (8) et une partie d'armature plongeante (9) qui sont guidées de manière mobile axialement l'une dans l'autre.

2. Soupape de gaz selon la revendication 1, **caractérisée en ce que** la partie d'armature plate (8) et/ou la partie d'armature plongeante (9) forme(nt) un élément de fermeture de soupape (10, 11) coopérant avec un siège de soupape (4, 5) ou est/sont reliée(s) à un tel élément de fermeture de soupape (10, 11).

3. Soupape de gaz selon la revendication 2, **caractérisée en ce que** l'élément de fermeture de soupape (10, 11) comporte une surface d'étanchéité qui peut être amenée en appui étanche contre le siège de soupape (4, 5), la surface d'étanchéité étant de préférence réalisée sur un corps d'étanchéité (12, 13) relié à l'élément de fermeture de soupape (10, 11).

4. Soupape de gaz selon l'une quelconque des revendications précédentes,
**caractérisée en ce qu'**un siège de soupape (4), qui est de préférence formé par deux rehaussements annulaires, limite une ouverture de passage (14) s'étendant le long d'un cercle et/ou ou un siège de soupape (5), qui est de préférence conique, limite un alésage de passage central (15).

5. Soupape de gaz selon l'une quelconque des revendications précédentes,
**caractérisée en ce que** la partie d'armature plate (8) ou la partie d'armature plongeante (9) est réalisée, au moins dans certaines régions, de manière cylindrique creuse et est traversée par au moins un alésage radial (16) et/ou un alésage axial (17) .

6. Soupape de gaz selon l'une quelconque des revendications précédentes,
**caractérisée en ce que** la partie d'armature plate (8) ou la partie d'armature plongeante (9) est réalisée, au moins dans certaines régions, en forme de boulon.

7. Soupape de gaz selon l'une quelconque des revendications précédentes,
**caractérisée en ce que** la partie d'armature plongeante (9) est introduite à travers la partie d'armature plate (8) et forme un épaulement (18) s'étendant radialement, contre lequel la partie d'armature plate (8) est précontrainte axialement par la force d'un ressort (19).

8. Soupape de gaz selon la revendication 7, **caractérisée en ce que** le ressort (19) s'appuie d'une part contre la partie d'armature plate (8) et d'autre part contre la partie d'armature plongeante (9), l'appui contre la partie d'armature plongeante (9) s'effectuant de préférence indirectement par le biais d'une rondelle de réglage (20) qui est fixée en position au moyen d'une bague de fixation (22) insérée dans une rainure annulaire (21), située du côté périphérique extérieur, de la partie d'armature plongeante (9) ou au moyen d'une douille à collerette (28) reliée à la partie d'armature plongeante (9), de préférence vissée sur celle-ci.

9. Soupape de gaz selon l'une quelconque des revendications 1 à 6,
**caractérisée en ce que** la partie d'armature plongeante (9) est introduite à travers la partie d'armature plate (8) et comporte une surface de butée (23) s'étendant radialement pour la partie d'armature plate (8), la force d'un premier ressort de fermeture (6) sollicitant la partie d'armature plongeante (9) en direction d'un premier siège de soupape (4) et la force d'un deuxième ressort de fermeture (7) sollicitant la partie d'armature plate (8) en direction d'un deuxième siège de soupape (5).

10. Soupape de gaz selon l'une quelconque des revendications précédentes,
**caractérisée en ce que** l'électroaimant (1) et l'armature (2) sont insérés dans un carter de soupape (24) qui comprend au moins un alésage d'afflux (25) s'étendant de manière radiale et/ou oblique, de telle sorte que la soupape de gaz puisse être traversée au moins radialement.

11. Soupape de gaz selon l'une quelconque des revendications précédentes,
**caractérisée en ce que** l'électroaimant (1) comporte un noyau polaire (26) qui comprend un alésage axial (27) servant de conduit d'afflux, de telle sorte que la soupape de gaz puisse être traversée au moins axialement.
